# EUROPÄISCHE PATENTANMELDUNG

(11) **EP 1 336 783 A2**
(43) Veröffentlichungstag der Anmeldung: **20.08.2003**
(21) Anmeldenummer: 03002704.9
(22) Anmeldetag: 06.02.2003
(51) Int. Cl.: F16K 31/08, F16K 31/06

(54) **Bistabiles elektromagnetisches Ventil**

(30) Priorität: 19.02.2002 DE 10206778; 16.04.2002 DE 10216688
(71) Anmelder: SCHROTT, Harald, 88131 Lindau (DE)
(72) Erfinder: Ott, Hubert, 88212 Ravensburg (DE); Grau, Thomas, 88260 Argenbühl (DE)
(74) Vertreter: Patentanwälte Eisele, Otten, Roth & Dobler

(57) **Zusammenfassung**

Es wird ein bistabiles elektromagnetisches Ventil (1) mit einer zwischen zwei Polschuhen (5, 6) angeordneten Ventilkammer (7) und einem darin befindlichen, zwischen zwei Endstellungen verschiebbaren Ventilkörper (8), der als Magnet für wenigstens einen Permanentmagneten (12, 13) und für wenigstens eine Steuerspule (3) ausgebildet ist vorgeschlagen, dass in kleiner Bauform realisierbar ist. Dies wird erfindungsgemäß dadurch erreicht, dass wenigstens ein Fluidkanal (15) als Zufluss in axialer Richtung zwischen der Außenwand des Polschuhs (5) und dem Ventilgehäuse (2) vorgesehen ist.

## Beschreibung

Die Erfindung betrifft ein bistabiles elektromagnetisches Ventil nach dem Oberbegriff des Anspruchs 1.

Derartige Ventile werden beispielsweise in Kältemittelkreisläufen verwendet, wie sie in den Druckschriften DE 37 18 490 oder EP 1 054 200 beschrieben sind.

Bei solchen Ventilen wird eine bistabile Situation dadurch erreicht, dass Permanentmagnete außerhalb des Ventilgehäuses neben der Ventilkammer oder neben den Polschuhen angeordnet sind, so dass der Ventilkörper zwei Endpositionen an den Polschuhen besitzt, in denen er durch diese Permanentmagnete gehalten wird.

Der Abfluss des im Betrieb durch das Ventil strömenden Fluids geschieht bei diesem Stand der Technik je nach Schaltstellung des Ventils durch eine zentrale, axiale Bohrung des einen oder anderen Polschuhs, wobei die eine Bohrung geöffnet und die andere hierbei durch den Ventilkörper geschlossen wird.

Der Zufluss erfolgt über eine radial mit der Ventilkammer verbundene Zuflussleitung, so dass das Ventil gewissermaßen die Form eines T-Stücks hat.

Durch die Zuflussleitung eines solchen Ventils werden die Anordnungsmöglichkeiten der Steuerspule eingeschränkt.

Mit der Druckschrift DE 37 18 490 wiederum ist eine Ventilanordnung offenbart, bei der der Zufluss in axialer Richtung, jedoch exzentrisch durch eine entsprechende Bohrung des Polschuhs verläuft. Die Zuflussleitung ist hierbei dicht mit dem Polschuh verbunden. Diese Anordnung bewirkt einen großen Durchmesser des entsprechenden Polschuhs.

Aufgabe der Erfindung ist demgegenüber, ein Ventil vorzuschlagen, dass eine kleine Bauform ermöglicht.

Diese Aufgabe wird ausgehend von einem Ventil der einleitend genannten Art durch die kennzeichnenden Merkmale des Anspruchs 1 gelöst.

Durch die in den Unteransprüchen genannten Maßnahmen sind vorteilhafte Ausführungen und Weiterbildungen der Erfindung möglich.

Erfindungsgemäß wird demnach wenigstens ein Fluidkanal zwischen der Außenwand eines Polschuhs und dem Ventilgehäuse vorgesehen. Dies hat zur Folge, dass im Bereich der Ventilkammer, kein separater Außenanschluss für den Zufluss des Fluids angebracht werden muss, wodurch die Flexibilität in der Anordnung der Steuerspule deutlich vergrößert wird. Darüber hinaus ist eine Bauform mit deutlich kleineren Außenmaßen, z.B. mit erheblich kleinerem Durchmesser, möglich, da die separate Bohrung für den Zufluss in dem Polschuh entfällt.

Vorteilhafterweise werden mehrere Fluidkanäle umfangseitig verteilt an der Außenwand des Polschuhs ausgebildet. Hierdurch wiederum ergibt sich eine gleichmäßige Anströmung des Ventilkörpers über den gesamten Umfang in axialer Richtung, wodurch Querkräfte auf den Ventilkörper durch die Fluidströmung weitgehend ausgeschlossen sind.

Durch die Anordnung der Fluidkanäle außerhalb der Ventilachse und somit außerhalb des Wirkungsbereichs des Ventilkörpers ergibt sich eine vom Ventilkörper unbeeinträchtigte Verbindung zwischen dem Innern der Ventilkammer und dem Zufluss des Ventils. Diese Verbindung ergibt eine stets gleichmäßige Anströmung der Ventilkammer und somit definierte Strömungsverhältnisse und einen definierten Strömungswiderstand des Ventils.

Vorzugsweise wird ein drehsymmetrischer Ventilkörper vorgesehen, an dessen Außenwandung der Fluiddurchlass für die Fluidströmung im Ventilgehäuse vorgesehen ist. Besonders vorteilhaft ist in diesem Zusammenhang die Verwendung eines kugelförmigen Ventilkörpers.

Derartig ausgebildete Ventilkörper können bei entsprechender gleichmäßiger Anströmung in axialer Richtung ohne umfangseitige, die Bauform vergrößernde, Führungsmittel betrieben werden, da sie durch den Staudruck des Fluids zentriert werden. Insbesondere ist dies im Falle einer Kugel als Ventilkörper möglich, deren Durchmesser kleiner als der Innendurchmesser des Ventilgehäuses ist. Der sich dadurch außenseitig ergebende Ringspalt dient als Fluiddurchlass, wobei durch die Fluidströmung der Ventilkörper bezüglich der Ventilachse zentriert wird.

Eine gute Zentrierung des Ventilkörpers ist von Vorteil, um einen guten zentrischen Sitz des Ventilkörpers und somit eine gute Dichtfunktion in der Endstellung zu gewährleisten.

Diese Ausführungsform bewirkt nicht nur eine gute Zentrierung des Ventilkörpers, sondern ermöglicht eine nahezu reibungsfreie Bewegung des Ventilkörpers im Innern der Ventilkammer, wodurch die Steuerspule kleiner dimensionierbar ist.

Weiterhin stellt eine Kugel ein Ventilkörper mit sehr geringer Masse dar, d.h. für die bistabile Funktion des Ventils können die Permanentmagnete kleiner dimensioniert bzw. weiter vom Ventilkörper beabstandet angeordnet werden. Darüber hinaus ergeben sich geringere Aufprallimpulse bei kleinerer Masse des Ventilkörpers, wodurch sich der Verschleiß an den Ventilsitzen reduziert und somit die Lebensdauer des Ventils erhöht wird. Ggf. kann auch auf eine aufwändige Härtung der Ventilsitze verzichtet werden.

Ein oder mehrere erfindungsgemäß außen liegende Fluidkanäle können beispielsweise dadurch realisiert werden, dass der Querschnitt des entsprechenden Polschuhs abweichend vom Querschnitt des Ventilgehäuses ausgebildet wird. Im Falle eines zylinderrohrförmigen Querschnitt des Ventilgehäuses können beispielsweise durch Abflachungen oder Einschnitte in die Außenwand des Polschuhs durch die sich dadurch ergebenden Zwischenräume die Fluidkanäle gebildet werden.

Vorzugsweise werden hierbei Zwischenbereiche in der Außenwand des Polschuhs vorgesehen, die am Ventilgehäuse anliegen, so dass sich in diesen Bereichen ein passgenau und somit zentrischer Sitz des Polschuhs im Ventilgehäuse ohne weitere Maßnahmen ergibt.

Die oben angeführte Bauweise ist sehr kompakt und weist, dadurch sehr schmale Durchgangsöffnungen für den Fluidstrom in der Ventilkammer auf. Dadurch ist die Anordnung empfindlich gegen Fremdkörper bzw. Schmutzartikel. Für entsprechende Anwendungen wird daher vorteilhafterweise ein Schmutzfilter vorgesehen.

Auf diese Weise werden die kritischen Bauelemente, das heißt der Ventilkörper und die Ventilsitze bzw. insgesamt die den Ventilkörper beinhaltende Ventilkammer zuverlässig vor einem externen Schmutzeintrag nach Fertigstellung des Fluidkreislaufs geschützt, da nur gereinigtes Fluid in die Ventilkammer gelangen kann.

Ein solcher Schmutzfilter kann magnetisch oder mechanisch ausgebildet werden. Die außen angeordneten Fluidkanäle erlauben hierbei beispielsweise die Magnete, die für die bistabile Wirkung des Magnets vorgesehen werden, auf der Innenseite des Gehäuses anzubringen, so dass das Fluid vor dem Erreichen der Ventilkammer diese Magnete passieren muss. Magnetische oder magnetisierbare Schmutzpartikel lagern sich dabei an den Magneten an und werden somit vom Innenraum der Ventilkammer ferngehalten. Ein sich daran anschließendes mechanisches Filter kann beispielsweise durch einen Distanzring zwischen solchen Ringmagneten gebildet werden, der porös ausgebildet oder auf sonstige Weise mit entsprechend kleinen Durchgangsöffnungen versehen wird.

Vorzugsweise wird der Schmutzfilter jedoch auf der Zuflussseite des Polschuhs im Ventilgehäuse angeordnet. Diese Position stellt die der Ventilkammer am nächsten liegende Anordnung für ein von der Ventilkammer separat angeordnetes Schmutzfilter dar.

Ein erfindungsgemäßes Schmutzfilter kann fest, das heißt nicht austauschbar oder nur mit dem gesamten Ventil austauschbar in das Ventilgehäuse gebaut werden, sofern die Filterkapazität für eine einmalige Reinigung des Fluidkreislaufs ausreichend ist.

Üblicherweise werden Filter in Fluidkreisläufen so ausgestaltet, dass sie austauschbar oder einer Reinigung zugänglich sind, da die Filter auf die Dauer verstopfen. Der Erfindung liegt jedoch die weitere Erkenntnis zugrunde, dass wenn ein solches Ventil stets in Kreisläufen eingesetzt wird, die für die Lebensdauer des Ventils in der Regel geschlossen bleiben, sich die Möglichkeit ergibt, ein Schmutzfilter fest in das Ventil zu verbauen. Dieses Filter muss dabei jedoch eine ausreichende Filterkapazität für eine einmalige Reinigung des gesamten im Kreislauf befindlichen Fluids aufweisen.

Da nach dieser einmaligen Reinigung keine weitere Schmutzfracht am Filter ankommt, kann ein Verstopfen ausgeschlossen werden, so dass der Austausch oder die Reinigung des Filters nicht erforderlich ist.

In einer Weiterbildung der Erfindung wird ein magnetisches Schmutzfilter vorgesehen. Ein magnetisches Schmutzfilter ist in der Lage, magnetische oder magnetisierbare Schmutzpartikel zurückzuhalten, die beispielsweise an der Innenwandung der Rohre des Kältemittelkreislaufs abgespült oder bei der Montage des Fluidkreislaufs zum Beispiel durch Verlöten in das Innere des Kreislaufs gelangen können. Gerade diese magnetischen oder magnetisierbaren Schmutzpartikel sind jedoch besonders kritisch im Hinblick auf Funktionsstörungen, da diese Partikel ohne vorherige Rückhaltemaßnahmen aufgrund der für die bistabile Ausführung erforderlichen Permanentmagnete in der Ventilkammer verbleiben und dort dauerhaft die Dichtigkeit des Ventils beinträchtigen und zugleich den Verschleiß erhöhen.

Besonders wirksam ist ein magnetisches Schmutzfilter, wenn es im unmittelbaren Kontakt mit Fluid steht. Daher wird in einer besonders vorteilhaften Ausführungsform der Erfindung ein Permanentmagnet innerhalb des Ventilgehäuses bzw. innerhalb dessen Anschlussleitung angeordnet.

In einer Weiterbildung dieser Ausführungsform wird ein Ringmagnet als Schmutzfilter vorgesehen. Ringmagnete sind kostengünstig im Handel erhältlich und bieten bei guten Montagemöglichkeiten im Innern eines Rundrohres eine große mit Schmutzpartikeln beladbare Oberfläche auf wobei zugleich ein ausreichend großer Strömungsquerschnitt für das Fluid, beispielsweise Kältemittel, vorhanden ist.

In einer anderen Ausführungsform der Erfindung wird ein mechanisches Filter alleine oder in Kombination mit einem magnetischen Filter vorgesehen. Ein mechanisches Filter ist in der Lage, auch nicht magnetische oder nicht magnetisierbare Schmutzpartikel zurückzuhalten und somit für eine vollständigere Reinigung des Kältemittels zu sorgen.

Besonders vorteilhaft ist die Kombination eines mechanischen Filters mit einem bezogen auf die Strömungsrichtung vorgeschalteten Magnetfilter, da durch Vorabfilterung der magnetischen bzw. magnetisierbaren Schmutzpartikel die Belastung des mechanischen Filters verringert wird, so dass dessen Dimensionierung kleiner ausführbar ist.

In einer vorteilhaften Ausführungsform wird der Magnetfilter zugleich als Halterung für das mechanische Filter verwendet, so dass eine separate Halterung am Ort des Magnetfilters entfallen kann.

Insbesondere in Kombination mit einem Ringmagneten wird das mechanische Filter vorzugsweise als Rohrsieb ausgebildet. Auf ein solches Rohrsieb kann beispielsweise ein Ringmagnet gesteckt werden, der passgenau an der Innenwandung des Zuflusses zur Ventilkammer anliegt. Auf diese Weise ist zum Einen das Rohrsieb an dieser Stelle fixiert und zum Anderen der Querschnitt des Zuflusses außerhalb des Rohrsiebes durch den Ringmagneten verschlossen, so dass das Fluid nur in den Innenraum des Rohrsiebes einströmen kann.

Insbesondere in Verbindung mit den oben genannten Merkmalen wird der Innenraum des Rohrsiebes mit dem Zufluss des Fluids, zum Beispiel des Kältemittels, und der Außenraum des Rohrsiebs mit der Ventilkammer verbunden. Die zurückgehaltenen Schmutzpartikel sammeln sich in diesem Fall im Innenraum des Rohrsiebes an, wobei gegebenenfalls magnetische bzw. magnetisierbare Partikel wie oben angegeben bereits an dem Permanentmagneten zurückgehalten werden.

Die Verwendung eines Rohrsiebs als mechanisches Filter bietet neben der oben angeführten günstigen Anordnung (in Strömungsrichtung betrachtet) vor der Ventilkammer zudem die Möglichkeit, dass die Filterkapazität durch eine entsprechende axiale Länge des Rohrsiebs groß genug gewählt werden kann.

Ein Ausführungsbeispiel der Erfindung ist in der Zeichnung dargestellt und wird anhand der Figuren nachfolgend näher erläutert.

Im Einzelnen zeigen
- Fig. 1: einen Querschnitt durch ein 2/2 Wegeventil gemäß der Erfindung,
- Fig. 2: einen Querschnitt durch einen 3/2, Wegeventil gemäß der Erfindung,
- Fig. 3: einen Querschnitt durch ein weiteres Ausführungsbeispiel eines 2/2 Wegeventils gemäß der Erfindung und
- Fig. 4: einen Querschnitt durch ein weiteres Ausführungsbeispiel eines 3/2 Wegeventils gemäß der Erfindung.

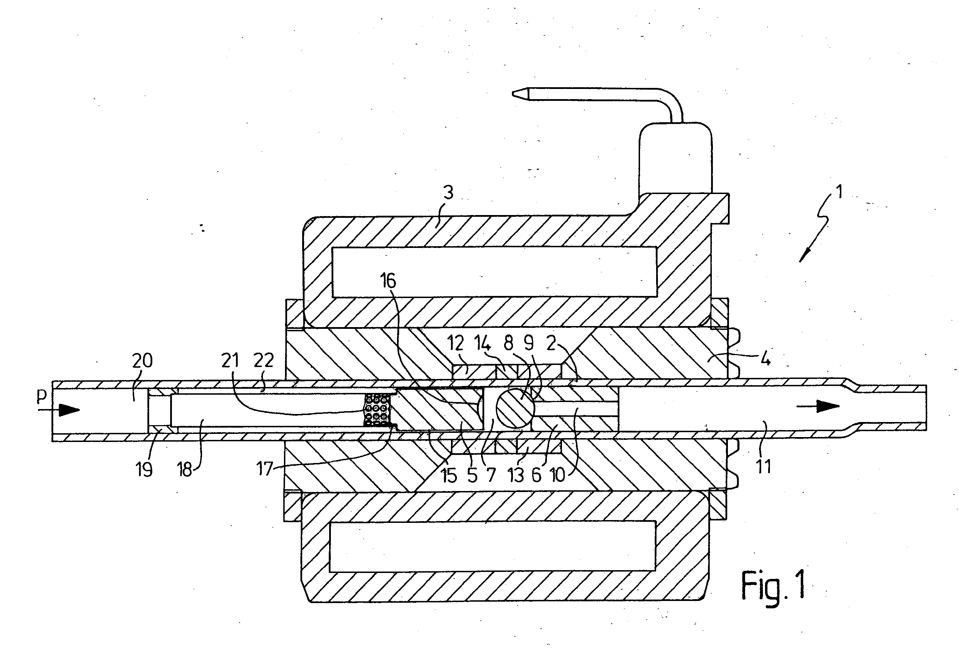

Das Ventil 1 gemäß Figur 1 umfasst ein rohrförmiges Ventilgehäuse 2, das eine Steuerspule 3 vollständig durchsetzt. Adapterstücke 4 sorgen hierbei für einen guten Sitz im Ventilgehäuse 2 und sind zugleich als Flussleitelemente für einen erhöhten Magnetfluss durch Polschuhe 5, 6 sowie durch eine Ventilkammer 7 ausgebildet. Im Inneren der Ventilkammer 7 befindet sich ein kugelförmiger Ventilkörper 8, der in der dargestellten Position auf dem Kugelsitz 9 des Polschuhs 6 aufliegt und dabei eine Durchgangsbohrung 10 verschließt. Die Durchgangsbohrung 10 mündet in die Abflussleitung 11 des Ventils 1.

Außerhalb des Ventilgehäuses 2 liegende Ringmagnete 12, 13 sorgen für das bistabile Verhalten des Ventils und sind durch einen Distanzring 14 zwischen den Adapterstücken 4 fixiert.

Der Polschuh 5 weist an seinem Außenumfang Ausnehmungen oder Abflachungen auf, durch die sich erfindungsgemäße Fluidkanäle 15 zwischen dem Polschuh 5 und dem Ventilgehäuse 2 ins Innere der Ventilkammer 7 ergeben. Die Fluidkanäle könnten auch durch Bohrungen im Polschuh 5 realisiert werden, deren zuflussseitige Öffnungen im Ringbereich zwischen einem Rohrsieb 18 und der Außenwand des Ventilgehäuses 2 liegen. Der Polschuh 5 weist weiterhin einen Kugelsitz 16 auf, um eine definiert Endlage des Ventilkörpers 8 in der zweiten, nicht dargestellten Endposition zu bewirken.

Der Polschuh 5 umfasst eine Abstufung 17, auf die das Rohrsieb 18 aufgeschoben ist. Am gegenüberliegenden Ende ist das Rohrsieb 18 in einem als Ringmagnet ausgebildeten Magnetfilter 19 fixiert. Der rohrförmige Bereich des Ventilgehäuses 2 in dem sich das Rohrsieb 18 und der Magnetfilter 19 befinden, dient als Zuflussleitung 20 für das entsprechende Fluid, das heißt insbesondere für Kältemittel.

Einströmendes Fluid (siehe Pfeil P) gelangt zunächst in den Bereich des Magnetfilters 19, das als Ringmagnet ausgebildet ist und direkt mit dem Fluid in Kontakt kommt. Dadurch werden bereits am Magnetfilter 19 weit von der Ventilkammer 7 beabstandet magnetische oder magnetisierbare Schmutzpartikel dauerhaft fixiert.

Anschließend gelangt das Fluid ins Innere des Rohrsiebs 18, das stirnseitig am gegenüberliegenden Ende durch den Polschuh 5 bzw. dessen Abstufung 17 verschlossen ist. Die Fluidströmung muss im Rohrsieb 18 demnach radial nach Außen erfolgen, wobei Schmutzpartikel, die größer als die Sieböffnungen 21 des Rohrsiebs 18 sind, im Innenraum des Rohrsiebs 18 zurückgehalten werden. Somit gelangt nur gereinigtes Fluid in den Außenraum 22 zwischen Rohrsieb 18 und Ventilgehäuse 2. Von dort gelangt das Fluid über die Fluidkanäle 15 ins Innere der Ventilkammer 7.

Die Strömung findet natürlich nur bei geöffnetem Ventil statt, das heißt in der Schaltstellung, in der der Ventilkörper 8 auf dem Kugelsitz 16 aufliegt und die Durchgangsbohrung 10 freigegeben ist.

Ein erfindungsgemäßes Ventil 1 kann problemlos in einen Fluidkreislauf, zum Beispiel einen Kältemittelkreislauf eingebaut werden, der fertigungsbedingt Schmutzpartikel beinhaltet, die für herkömmliche Kältemittelventile nicht verträglich sind und Funktionsstörungen hervorrufen.

Die Anwendung des Ventils 1 zielt auf geschlossene Fluidkreisläufe ab, die über die Lebensdauer des Ventils 1 betrachtet nach der Fertigung geschlossen bleiben. Die Filterkapazität des Filtersystems bestehend aus Rohrfilter 18 und Magnetfilter 19 ist hierbei so auszulegen, dass eine einmalige komplette Reinigung des im Kreislauf befindlichen Fluids ohne Verstopfung folgen kann.

Auf diese Weise, das heißt durch die Verwendung eines Filters 18, 19 in der Zuflussleitung 20 des Ventilgehäuses 2 und insbesondere durch die unmittelbare Anordnung neben der Ventilkammer 7 wird ein Schmutzeintrag in die Ventilkammer 7 zuverlässig soweit ausgeschlossen, dass eine dauerhaft dichte und verschleißarme Funktion des Ventils 1 gewährleistet werden kann.

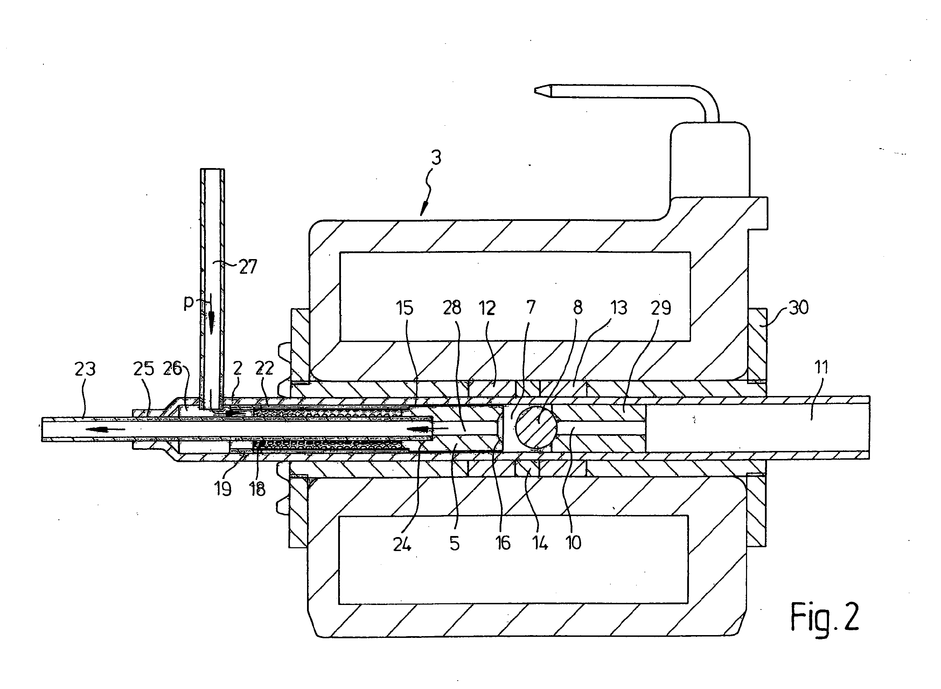

Figur 2 entspricht im Wesentlichen dem vorgenannten Ausführungsbeispiel, wobei nunmehr abweichend eine zweite, rohrförmige Abflussleitung 23 ins Innere des Ventilgehäuses 2 bis zum Polschuh 5 geführt und dort in einer entsprechenden Bohrung 24 dicht fixiert ist. Das Ventilgehäuse 2 und die Abflussleitung 23 sind an einer Dichtstelle 25 dicht gegeneinander abgeschlossen, beispielsweise verpresst oder verlötet.

Somit ergibt sich ein Zwischenraum 26 zwischen der Abflussleitung 23 und dem Ventilgehäuse 2, an dem eine Zuflussleitung 27 angeschlossen ist. Die Zuflussleitung 27 kann beispielsweise in einer entsprechenden Öffnung des Ventilgehäuses 2 verlötet sein.

In dieser Ausführungsform umfasst auch der Polschuh 5 eine Durchgangsbohrung 28, die die Ventilkammer 7 über die Fluidkanäle 15 mit dem Zwischenraum 26 verbinden.

Das Fluid bzw. Kältemittel kann in Richtung des Pfeils P in den Zwischenraum 26 und von dort durch das Magnetfilter 19 in den nunmehr ringförmigen Innenraum zwischen dem Rohrsieb 18 und der Abflussleitung 23 gelangen. Anschließend strömt das Fluid radial nach Außen in den Außenraum 22 zwischen Rohrsieb 18 und Ventilgehäuse 2, von wo es über die Fluidkanäle 15 in die Ventilkammer 7 gelangt.

Je nach Schaltstellung des Ventilkörpers 8 fließt das Fluid dann entweder über die Abflussleitung 23 oder über die Abflussleitung 11 ab. In der dargestellten Schaltstellung ist die Durchgangsbohrung 28 des Polschuhs 5 geöffnet, das heißt der Abfluss geschieht über die Abflussleitung 23.

Durch einen Steuerpuls der Steuerspule 3 kann der Ventilkörper 8 auf den gegenüberliegenden Kugelsitz 16 gebracht werden, wodurch die Durchgangsbohrung 28 verschlossen und die Durchgangsbohrung 10 geöffnet wird. In dieser beschriebenen, jedoch nicht dargestellten Schaltstellung fließt das Fluid über die Abflussleitung 11 ab.

Anstelle der Adapterstücke 4, die im Innern der Steuerspule 3 eine konusförmige Abflussfläche aufweisen, sind vorliegend hülsenförmige Flussleitbleche 29 zur Führung des Magnetflusses im Inneren der Steuerspule 3 vorgesehen, die den Zwischenraum zwischen Ventilgehäuse 2 und Steuerspule 3 vollständig ausfüllen. Die Flussleitbleche 29 sind jeweils mit einer Abschlussplatte 30 verbunden, die ihrerseits mit nicht näher dargestellten, sogenannten Jochblechen verbunden ist bzw. in diese übergeht. Die Flussleitbleche 29 können gemeinsam mit der Abschlussplatte 30 und der gesamten, nicht näher dargestellten Jochblechanordnung aus einem Flachmaterial gestanzt und gebogen bzw. gewickelt werden.

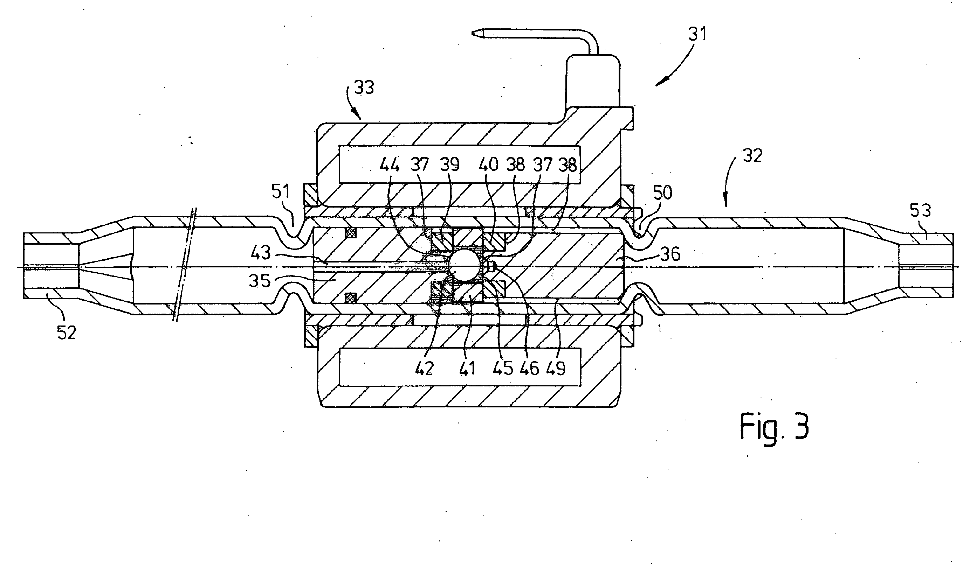

Figur 3 zeigt eine weitere Ausführung der Erfindung, die sich durch verschiedene Merkmale von den vorbeschriebenen Ausführungsbeispielen unterscheidet.

Im Einzelnen sind dies zwei Polschuhe 35, 36, die jeweils an ihrem inneren Ende eine Ringschulter 37, 38 aufweisen. Zwei Permanentmagnete 39, 40, die als Ringmagnete ausgebildet sind, sind auf die Polschuhe 35, 36 bis zum Anschlag an den Ringschultern 37, 38 aufgeschoben. Zwischen den Permanentmagneten 39, 40 ist ein Distanzring 41 eingelegt, der zugleich als Filterelement und Führungsring für einen kugelförmigen Ventilkörper 42 dient. Der Ventilkörper 42 ist aus einem magnetischen bzw. magnetisierbaren Material hergestellt und dient somit unmittelbar als Ventilanker. In einem Polschuh 35 ist eine Durchgangsbohrung 43 angebracht, die in einem vorliegend kugelförmigen Ventilsitz 44, der jedoch auch anderweitig, zum Beispiel als Kegelsitz ausgebildet werden kann, im Inneren der Ventilkammer 45 ausmündet. Der gegenüberliegende Polschuh 36 weist lediglich eine Sackbohrung 46 mit einem endseitigen Kugelsitz 47 der ebenfalls auch anderweitig, zum Beispiel als Kugelsitz ausgebildet werden kann, für den Ventilkörper 42 auf.

Der Polschuh 36 ist außenseitig mit Abflachungen 48 versehen, so dass sich an dieser Stelle wiederum die erfindungsgemäßen Fluidkanäle 49 zwischen dem Polschuh 36 und dem Ventilgehäuse 32 ausbilden.
Sämtliche inneren Bauelemente des Ventils 31 sind zwischen zwei rundum laufenden Sicken 50, 51 im Ventilgehäuse 32 verpresst und somit in axialer Richtung fixiert.

Endseitig sind am Ventilgehäuse 32 zwei Anschlussrohre 52, 53 angebracht, mit denen das Ventil an den jeweiligen Fluidkreislauf angeschlossen werden kann. Die Anschlussrohre 52, 53 sind im vorliegenden Ausführungsbeispiel an das Ventilgehäuse 32 einstückig angeformt, so dass keine Verbindungsstelle und somit keine Dichtprobleme an dieser Stelle vorliegt.

Die Fluidzufuhr des Ventils 31 gemäß Figur 3 erfolgt über das Anschlussrohr 53. Durch die Fluidkanäle 49 zwischen dem Polschuh 36 und dem Ventilgehäuse 32 gelangt das Fluid in den Bereich der Ventilkammer 45. Hierbei strömt es außenseitig zunächst am Permanentmagnet 40 entlang und gelangt dann in den sowohl in radialer als auch in axialer Richtung durchlässigen Distanzring 41. Hierdurch wird auch der gegenüberliegenden Permanentmagnet 39 angeströmt. Die Permanentmagnete 39, 40 weisen gegenüber dem Innendurchmesser des Ventilgehäuses 32 kleinern Außendurchmesser auf, so dass zwischen den Permanentmagneten 39, 40 und dem Ventilgehäuse 32 ausreichend Platz für die Fluidströmung und für die Anlagerung von magnetischen Schmutzpartikeln verbleibt. Der Distanzring 41 dient zudem als mechanisches Filterelement, um nichtmagnetische Schmutzpartikel aus dem Fluid zurückzuhalten, bevor diese ins Innere der Ventilkammer 45 vordringen. Zugleich bietet der Distanzring 41 eine Führung für den kugelförmigen Ventilkörper 42.

In der dargestellten Schaltstellung des Ventils 31 ist das 2/2 Wege-Ventil geschlossen, d.h. der Ventilkörper 42 sitzt auf dem Ventilsitz 44 und dichtet die Durchgangsbohrung 43 ab. Durch Beaufschlagung der Steuerspule 33 kann der Ventilkörper 42 in die gegenüberliegende Position geschaltet werden, in der er am Kugelsitz 47 anschlägt und somit die Durchgangsbohrung 43 zum Innenraum der Ventilkammer 45 hin öffnet. Das Fluid kann in dieser Schaltstellung durch die Durchgangsbohrung 43 bis hin zum Anschlussrohr 52 fließen.

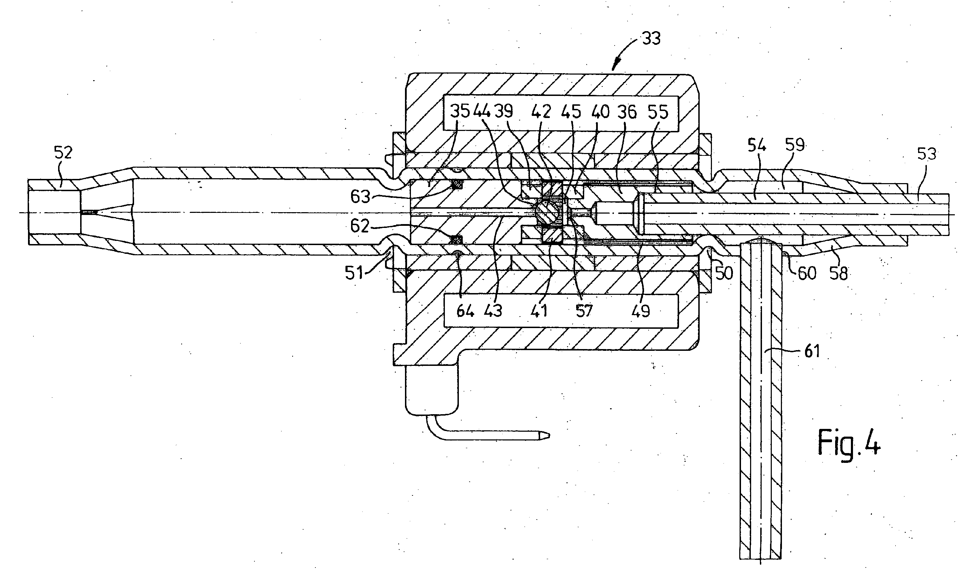

Die Ventilanordnung gemäß Figur 4 entspricht im Wesentlichen dem vorbeschriebenen Ausführungsbeispiel. Der Unterschied besteht darin, dass das Ventil gemäß Figur 4 als 3/2 Wege-Ventil ausgestaltet ist.

Hierzu wird in das Anschlussrohr 53 ein zentrales Rohr 54 eingesetzt, das sich bis hin zum Polschuh 36 erstreckt, der mit einer Aufnahmebohrung 55 versehen ist, um das zentrale Rohr 54 aufzunehmen.

Die Aufnahmebohrung 55 im Polschuh 36 wird über eine Durchgangsbohrung 56 bis ins Innere der Ventilkammer 45 verlängert. Im Mündungsbereich ist ein zum Beispiel kugeloder kegelförmiger Ventilsitz 57 im Polschuh 36 angebracht, der abwechselnd mit dem Ventilsitz 44 je nach Schaltstellung des Ventils geöffnet oder geschlossen wird.

Zwischen dem zentralen Rohr 54 und dem Gehäusebereich 58 ergibt sich ein Zwischenraum 59, der über eine Bohrung 60 an eine Zuleitung 61 angeschlossen ist.

In der dargestellten Ausführungsform ist weiterhin ein Dichtungselement 62 in einer Ringnut 63 des Polschuhs 35 eingelegt und, wie durch eine äußere Sicke 64 erkennbar ist, verpresst oder verlötet.

Das 3/2 Wege-Ventil gemäß Figur 2 besitzt eine Zuleitung 61 sowie zwei Ausgangsleitungen. Eine der Ausgangsleitungen wird wie im vorgenannten Ausführungsbeispiel durch das Anschlussrohr 52, die andere Ausgangsleitung wird jedoch nunmehr vom Anschlussrohr 53 gebildet, das in der 2/2 Wegeausführung als Zuleitung gedient hat.

Die Zuleitung geschieht über den Zwischenraum 59 hin zu den Fluidkanälen 49. Wie im vorgenannten Ausführungsbeispiel werden die Permanentmagnete 39, 40 und der Distanz- und Führungsring 41 angeströmt. Auch hier wirken die Permanentmagnete 39 und 40 als magnetische Filterelemente, um magnetische Schmutzpartikel festzuhalten, während der Distanz- und Führungsring 41 als Filterring ausgebildet ist, der in radialer und in axialer Richtung fluiddurchlässig ist. Auf diese Weise gelangt das Fluid in das Innere der Ventilkammer 45.

Nunmehr kann das Fluid entweder durch die Durchgangsbohrung 43 oder abhängig von der Schaltstellung des Ventils durch die Durchgangsbohrung 56 entweichen. In der dargestellten Schaltposition ist der Ventilsitz 44 durch den Ventilkörper 42 geschlossen, während der Ventilsitz 57 geöffnet ist. Die Fluidströmung verläuft in dieser Schaltstellung demnach hin zur Ausgangsleitung 53.

Nach dem Umschalten mit Hilfe eines Steuerimpulses durch die Steuerspule 33 wird der Ventilsitz 57 geschlossen und zugleich der Ventilsitz 44 geöffnet, so dass die Fluidströmung über die Durchgangsbohrung 43 hin zum Anschlussrohr 52 erfolgt. Die Wirkungsweise der Steuerspule 33 sowie der Permanentmagnete 39 und 40 entspricht hierbei vollkommen dem vorgenannten Ausführungsbeispiel.

Wie anhand des Dichtungselementes 62 veranschaulicht wird, ist für einen möglichst dichten Abschluss zwischen dem einen Polschuh 35 und dem Ventilgehäuse 32 Sorge zu tragen. Dies wird nur beispielhaft mit Hilfe eines ringförmigen Dichtungselementes verwirklicht. Es könnte auch eine flächige Verpressung oder Verlötung vorgesehen werden. Eine solche Anordnung würde dem anhand von Figur 3 dargestellten Ausführungsbeispiel entsprechen.

In entsprechender Weise ist das zentrale Rohr 54 gegenüber dem Polschuh 36 abzudichten. Auch hier kann auf nicht näher dargestellte Weise bei Bedarf ein Dichtelement eingesetzt werden. In der Ausführung gemäß Figur 32 liegt das zentrale Rohr 54 flächig an, so dass sich ein dichter Abschluss durch Verpressung oder Verlötung ergibt.

Wie anhand von Figur 4 erkennbar wird, kann durch eine Verpressung oder Verlötung das zentrale Rohr 54 sowohl in axialer als auch in radialer Richtung fixiert werden, was anhand der am zentralen Rohr 54 anliegenden Sicke 50 deutlich wird. In diesem Fall ist dafür Sorge zu tragen, dass die Sicke 50 nicht rundumlaufend anliegt, so dass stets ein ausreichender Durchgang zwischen dem Zwischenraum 59 und den Fluidkanälen 49 offenbleibt.

### Bezugszeichenliste:

- 1: Ventil
- 2: Ventilgehäuse
- 3: Sternspule
- 4: Adapterstücke
- 5: Polschuh
- 6: Polschuh
- 7: Ventilkammer
- 8: Ventilkörper
- 9: Kugelsitz
- 10: Durchgangsbohrung
- 11: Abflussleitung
- 12: Ringmagnet
- 13: Ringmagnet
- 14: Distanzring
- 15: Fluidkanal
- 16: Kugelsitz
- 17: Abstufung
- 18: Rohrsieb
- 19: Magnetfilter
- 20: Zuflussleitung
- 21: Sieböffnung
- 22: Außenraum
- 23: Abflussleitung
- 24: Bohrung
- 25: Dichtstelle
- 26: Zwischenraum
- 27: Zuflussleitung
- 28: Durchgangsbohrung
- 29: Flussleitblech
- 30: Abschlussplatte
- 31: Ventil
- 32: Ventilgehäuse
- 33: Steuerspule
- 35: Polschuh
- 36: Polschuh
- 37: Ringschulter
- 38: Ringschulter
- 39: Permanentmagnet
- 40: Permanentmagnet
- 41: Distanzring
- 42: Ventilkörper
- 43: Durchgangsbohrung
- 44: Ventilsitz
- 45: Ventilkammer
- 46: Sackbohrung
- 47: Kugelsitz
- 48: Abflachung
- 49: Fluidkanal
- 50: Sicke
- 51: Sicke
- 52: Anschlussrohr
- 53: Anschlussrohr
- 54: zentrales Rohr
- 55: Aufnahmebohrung
- 56: Durchgangsbohrung
- 57: Ventilsitz
- 58: Gehäusebereich
- 59: Zwischenraum
- 60: Bohrung
- 61: Zuleitung
- 62: Dichtungselement
- 63: Ringnut
- 64: Sicke

## Patentansprüche

1. Bistabiles elektromagnetisches Ventil mit einer zwischen zwei Polschuhen angeordneten Ventilkammer und einem darin befindlichen, zwischen zwei Endstellungen verschiebbaren Ventilkörper, der als Magnet für wenigstens einen Permanentmagneten und für wenigstens eine Steuerspule ausgebildet ist, **dadurch gekennzeichnet, dass** wenigstens ein Fluidkanal (15) als Zufluss in axialer Richtung zwischen der Außenwand des Polschuhs (5) und dem Ventilgehäuse (2) vorgesehen ist.

2. Ventil nach Anspruch 1, **dadurch gekennzeichnet, dass** mehrere Fluidkanäle (15) umfangseitig am Polschuh (5) verteilt vorgesehen sind.

3. Ventil nach einem der vorgenannten Ansprüche, **dadurch gekennzeichnet, dass** der Querschnitt des die Fluidkanäle aufweisenden Polschuhs (5) vom Querschnitt des Ventilgehäuses (2) abweicht.

4. Ventil nach einem der vorgenannten Ansprüche, **dadurch gekennzeichnet, dass** zwischen den Fluidkanälen (15) Zwischenbereiche am Polschuh vorgesehen sind, die am Ventilgehäuse (2) anliegen.

5. Ventil nach einem der vorgenannten Ansprüche, **dadurch gekennzeichnet, dass** der Ventilkörper (8) drehsymmetrisch ausgebildet ist.

6. Ventil nach einem der vorgenannten Ansprüche, **dadurch gekennzeichnet, dass** der Ventilkörper (8) an eine Kugel ist.

7. Ventil nach einem der vorgenannten Ansprüche, **dadurch gekennzeichnet, dass** ein Schmutzfilter (18, 19) auf der Zuflussseite vor der Ventilkammer vorgesehen ist.

8. Ventil nach einem der vorgenannten Ansprüche, **dadurch gekennzeichnet, dass** das Schmutzfilter (18, 19) unmittelbar neben einem Polschuh (5) angeordnet ist.

9. Ventil nach einem der vorgenannten Ansprüche, **dadurch gekennzeichnet, dass** das Schmutzfilter (18, 19) fest im Ventilgehäuse (2) verbaut ist.

10. Ventil nach einem der vorgenannten Ansprüche, **dadurch gekennzeichnet, dass** ein magnetisches Schmutzfilter (19) vorgesehen ist.

11. Ventil nach einem der vorgenannten Ansprüche, **dadurch gekennzeichnet, dass** ein mechanisches Filter (18) vorgesehen ist.

12. Ventil nach einem der vorgenannten Ansprüche, **dadurch gekennzeichnet, dass** ein mechanisches Filter (18) und ein magnetisches Filter (19) vorgesehen sind.

13. Ventil nach einem der vorgenannten Ansprüche, **dadurch gekennzeichnet, dass** das mechanische Filter (18) als Rohrsieb ausgebildet ist.

14. Ventil nach einem der vorgenannten Ansprüche, **dadurch gekennzeichnet, dass** der Innenraum des Rohrsiebs (18) mit dem Zufluss (20) und der Außenraum (22) über den wenigstens einen Fluidkanal mit der Ventilkammer (7) verbunden ist.

15. Ventil nach einem der vorgenannten Ansprüche, **dadurch gekennzeichnet, dass** das Magnetfilter (19) auf der Zuflussseite (20) des mechanischen Siebs (18) angeordnet ist.

16. Ventil nach einem der vorgenannten Ansprüche, **dadurch gekennzeichnet, dass** die Permanentmagnete außerhalb der Ventilkammer angeordnet sind.

17. Ventil nach einem der vorgenannten Ansprüche, **dadurch gekennzeichnet, dass** magnetische Flussleithülsen im Spuleninneren vorgesehen sind.

18. Ventil nach einem der vorgenannten Ansprüche, **dadurch gekennzeichnet, dass** die Flussleithülsen aus Blech gewickelt sind.

19. Kälteerzeugungskreis für eine Kühlanlage, insbesondere mit mehreren Kühlräumen, einem Kompressor, einem Kondensator, mehreren Verdampfern die wenigstens einem der Kühlräume zugeordnet sind, sowie wenigstens einem elektrischen Steuerventil zur Verbindung des Kondensators mit einem oder mehreren der Verdampfern entsprechend vorbestimmten Betriebsarten, **dadurch gekennzeichnet, dass** das Steuerventil (1) gemäß einem der vorgenannten Ansprüche ausgebildet ist.

20. Haushaltsgerät mit einem Kälteerzeugungskreis, insbesondere Kühlschrank oder Kühltruhe, **dadurch gekennzeichnet, dass** ein Kälteerzeugungskreis mit einem Ventil gemäß einem der Ansprüche 1 bis 18 vorgesehen ist.
